# EUROPEAN PATENT APPLICATION

(11) **EP 4 741 255 A1**
(43) Date of publication of application: **13.05.2026**
(21) Application number: 25180908.3
(22) Date of filing: 04.06.2025
(51) Int. Cl.: B62B 3/00, B62B 3/02, B62B 7/06

(54) **FOLDABLE STROLLER WAGON**

(71) Applicant: Changde Yixiang Industrial Co., Ltd., Changde, Hunan Province (CN)
(72) Inventor: XIANG, ROCK, Hu Nan Province (CN); ZHOU, JIN-SONG, Hu Nan Province (CN); LI, JOHN, Hu Nan Province (CN)
(74) Representative: Cabinet Chaillot

(57) **Abstract**

A foldable stroller wagon (3) includes a frame set (31) where a holding set (32) and at least one seat set (33) are respectively disposed. The frame set (31) includes two main frames (310, 311), a first acting member (313) disposed between the main frames (310, 311), and a positioning slot (316) formed in the main frames (310, 311). The holding set (32) includes a bottom base (320), a handle unit (321) pivotally disposed on the bottom base (320), a second acting member (322) slidably disposed on the bottom base (320) and connected to the first acting member (313), and a third acting member (323) disposed on the handle unit (321) . Accordingly, an action of swinging the handle unit (321) to a floor plate (330) of the seat set (33) forces the third acting member (323) to move the second acting member (322) . The movement of the second acting member (322) causes the first acting member (313) to withdraw from the positioning slot (316) for unlocking the main frames (310, 311), thereby folding the stroller wagon (3) easily and quickly.

## Description

### BACKGROUND OF THE INVENTION

### 1. Field of the Invention

This invention relates to a stroller and relates particularly to a foldable stroller wagon.

### 2. Description of the Related Art

A baby stroller is considered as one of the most practical baby products because it is usable from a newborn period to a kindergarten period if certain conditions are satisfied. A baby stroller is helpful not only in daily life but also in short or long journey. Different types of baby strollers are applicable to different occasions to thereby meet different requirements. A baby stroller also assists in relieving the burden on parents, allowing babies to have comfortable experience when going out, and training babies to be independent. Therefore, baby raising can be easier when a baby stroller is properly used before the baby can walk independently.

When consumers choose a baby stroller, one of the priorities for consumers is that whether the baby stroller can be quickly folded and unfolded. A foldable baby stroller is not only convenient for transportation, carrying and storage, but also suitable for parent who often takes care of their baby alone. However, folding and unfolding operations of a conventional foldable baby stroller are generally complicated and difficult. Multiple steps are required in order to properly fold or unfold the baby stroller, and that is time-consuming and inconvenient. Further, in order to make the baby stroller lighter, its weight and volume are reduced, and that will also reduce the seating space for babies, affect the seating comfort, and cause the poor moving stability, and that require to be improved.

### SUMMARY OF THE INVENTION

The object of this invention is to provide a foldable stroller wagon capable of simplifying folding and unfolding operations, saving time and labor for executing the aforesaid operations, providing enough space for use, increasing the moving stability, and improving the seating comfort.

The foldable stroller wagon of this invention comprises a frame set, a holding set and at least one seat set respectively disposed on the frame set. The frame set includes two main frames, a plurality of wheels installed below the main frames, a positioning slot formed inside the main frames, and a first acting member movably installed between the main frames. The holding set includes a bottom base installed on any one of the main frames, a handle unit pivotally connected to the bottom base, a second acting member movably installed on the bottom base and connected to the first acting member, and a third acting member installed on the handle unit and located relative to the second acting member. The seat set includes a floor plate, a sealing plate connected to the floor plate, two handrails pivotally installed on at least one main frame and located in opposing relationship, and a back plate installed between the handrails. During a folding operation, the back plate and the handrails are swung to the floor plate. The handle unit is then swung to the floor plate so that the third acting member is forced to push the second acting member by the swinging action of the handle unit. The movement of the second acting member then forces the first acting member to withdraw from the positioning slot so that the main frames are unfixed and capable of being folded. Thus, the folding operation is easy and simplified, thereby reducing the time and labor expended on the folding operation. The foldable stroller wagon helps reduce the occupied space after being folded. Further, the foldable stroller wagon is provided with a stable structure and sufficient space for seating or storing after being unfolded, thereby improving the moving stability and improving the seating comfort.

Preferably, the frame set includes a first limiting member disposed on one of the main frames, a second limiting member disposed on another one of the main frames and located beside the first limiting member, and a first elastic member disposed on the second limiting member. The positioning slot is formed between the first limiting member and the second limiting member. The first acting member is pushed into the positioning slot by an elasticity of the first elastic member.

Preferably, a limiting unit is disposed on the first limiting member. A limiting slot is formed on the second limiting member. The limiting unit is adapted to be engaged with the limiting slot, thereby strengthening an engagement between the main frames.

Preferably, the holding set includes a sliding slot recessedly formed into the handle unit, at least one locking slot formed on a periphery of the sliding slot, a fastening unit disposed on the handle unit, a second elastic member connected to the fastening unit, a locking unit penetrated through the fastening unit, and a functional unit disposed on the handle unit and connected to the fastening unit. The fastening unit is pushed by an elasticity of the second elastic member, and the locking unit is embedded in the locking slot to fix the handle unit after the fastening unit is pushed by the second elastic member. A movement of the fastening unit is driven by triggering the functional unit so that the locking unit escapes from the locking slot because of the movement of the fastening unit and slides into the sliding slot to unlock the handle unit.

Preferably, the seat set includes a first telescopic member disposed on the sealing plate, a receiving slot formed on the floor plate and adapted to accommodate the first telescopic member, and a first operating member connected to the first telescopic member. The first operating member is operated to insert the first telescopic member into the receiving slot or withdraw the first telescopic member from the receiving slot. The sealing plate and the floor plate thereby are engaged with each other by the insertion of the first telescopic member. The sealing plate thereby is separated from the floor plate by the withdrawal of the first telescopic member.

Preferably, the seat set includes two second telescopic members and a second operating member disposed on the back plate and connected to the second telescopic members. Each second telescopic member is disposed on a place where the back plate and each handrail meet. The second operating member is triggered to separate the second telescopic members from the handrails so that the back plate and the handrails are in an unlocked state.

Preferably, the seat set includes a first engagement member disposed on a place where each handrail and at least one main frame connect, an engagement slot formed on the first engagement member, a third elastic member disposed in the engagement slot, a second engagement member located relative to the first engagement member, and an engagement unit disposed on the second engagement member. The engagement unit is located in the engagement slot, and the third elastic member is compressed by the engagement unit when each handrail is engaged with the back plate.

Preferably, an assistant slot is formed on the first engagement member. An assistant unit is disposed on the second engagement member. The assistant unit is inserted into the assistant slot for limiting a swinging angle of each handrail when the first engagement member and the second engagement member are engaged with each other.

Preferably, at least one auxiliary frame is pivotally connected to at least one main frame. The auxiliary frame includes an auxiliary base, an auxiliary unit disposed in the auxiliary base, a fourth elastic member disposed in the auxiliary base and located on one side of the auxiliary unit, and a releasing unit disposed on another side of the auxiliary unit. The auxiliary unit is pushed in one direction by pressing the releasing unit to unlock the auxiliary base. The unlocking state of the auxiliary base allows the auxiliary frame to swing. The auxiliary unit is pushed in another direction by an elasticity of the fourth elastic member to lock the auxiliary base and prevent the auxiliary frame from swinging.

Preferably, the seat set includes a first guiding member, a second guiding member located relative to the first guiding member, a guiding slot formed on the first guiding member, and a guiding unit disposed on the second guiding member and located in the guiding slot. The first guiding member and the second guiding member are disposed on a place where the back plate and at least one main frame connect for limiting a swinging angle of the back plate.

Preferably, two seat sets are adopted. Each seat set is disposed on each main frame.

### BRIEF DESCRIPTION OF THE DRAWINGS

Fig. 1 is a perspective view showing a first preferred embodiment of this invention;
Fig. **2** is a schematic view showing the first preferred embodiment of this invention;
Figs. **3A** and **3B** are schematic views showing partial elements of the holding set;
Figs. **4A** and **4B** are schematic views showing partial elements of the frame set;
Figs. **5****,** **6A****,** **6B****,** **7****,** **8** and **9** are schematic views showing partial elements of the seat set;
Fig. **10** is a schematic view showing the first preferred embodiment of this invention which is folded properly;
Fig. **11** is a perspective view showing a second preferred embodiment of this invention characterized by the auxiliary frames;
Fig. **12** is a schematic view showing one auxiliary frame; and
Fig. **13** is a cross-sectional view showing the auxiliary frame.

### DETAILED DESCRIPTION OF THE PREFERRED EMBODIMENTS

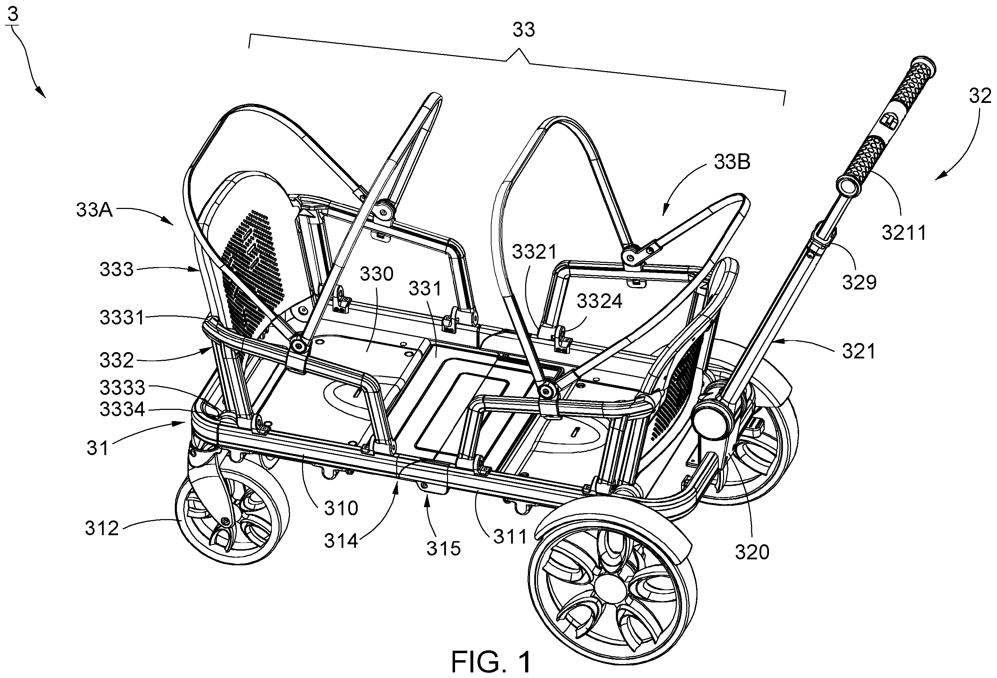

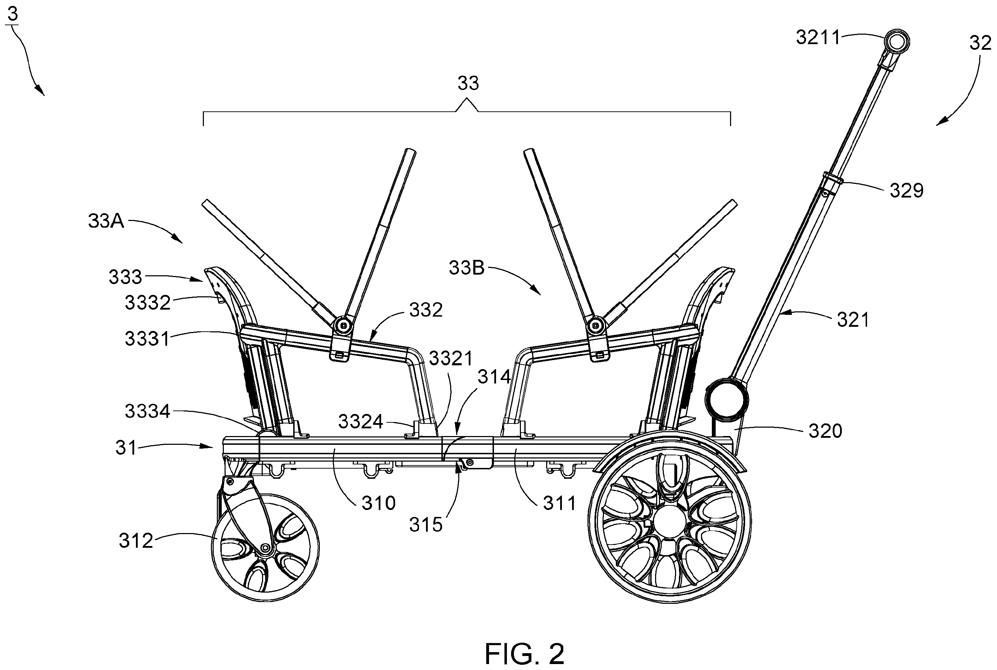

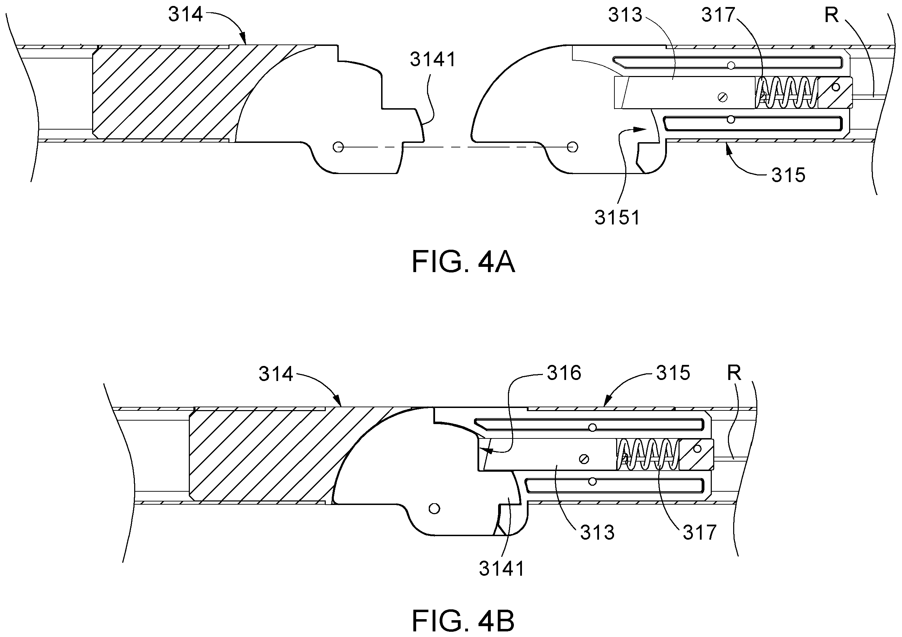

Referring to Figs. **1** and **2****,** a first preferred embodiment of a foldable stroller wagon **3** of this invention is disclosed. The foldable stroller wagon **3** comprises a frame set **31,** a holding set **32** installed on the frame set **31,** and at least one seat set **33** installed on the frame set **31.** In this preferred embodiment, here takes an example that two seat sets **33A, 33B** are adopted and respectively disposed on the frame set **31.** The seat sets **33A, 33B** are situated in opposing relationship. Referring to Figs. **1****,** **4A** and **4B****,** the frame set **31** includes a front main frame **310,** a rear main frame **311** connected to the front main frame **310,** a plurality of wheels **312** respectively disposed below the front main frame **310** and the rear main frame **311,** a first acting member **313** movably disposed between the front main frame **310** and the rear main frame **311,** a first limiting member **314** disposed on the front main frame **310,** a second limiting member **315** disposed on the rear main frame **311** and located beside the first limiting member **314,** a positioning slot **316** formed between the first limiting member **314** and the second limiting member **315,** and a first elastic member **317** disposed on the second limiting member **315** and connected to the first acting member **313.** Thus, the first acting member 313 is pushed by an elasticity of the first elastic member **317** to be inserted into the positioning slot **316.** A limiting unit **3141** is disposed on the first limiting member **314,** and a limiting slot **3151** is formed on the second limiting member **315.** The limiting unit **3141** is adapted to be engaged with the limiting slot **3151** so that the first limiting member **314** and the second limiting member **315** are engaged with each other when the limiting unit **3141** is situated in the limiting slot **3151.**

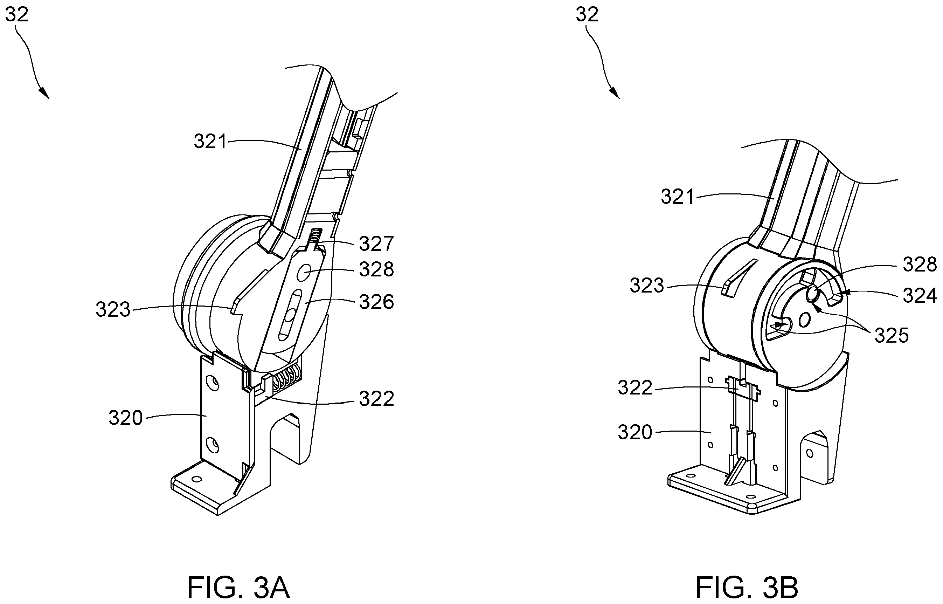

Referring to Figs. **2****,** **3A** and **3B****,** the holding set **32** includes a bottom base **320** connected to the rear main frame **311,** a handle unit **321** pivotally disposed on the bottom base **320,** a second acting member **322** slidably disposed on the bottom base **320** and connected to the first acting member **313,** a third acting member **323** disposed on the handle unit **321** and located relative to the second acting member **322,** a sliding slot **324** recessedly formed into the handle unit **321,** at least one locking slot **325** formed on a periphery of the sliding slot **324,** a fastening unit **326** disposed on the handle unit **321,** a second elastic member **327** connected to the fastening unit **326,** a locking unit **328** penetrated through the fastening unit **326,** and a functional unit **329** disposed on the handle unit **321** and connected to the fastening unit **326.** The fastening unit **326** and the functional unit **329** are situated in opposing relationship. In this preferred embodiment, the second acting member **322** and the first acting member **313** are connected by a rope unit **R** as shown in Figs. **4A** and **4B****.** The sliding slot **324** has a curve shape. Two locking slots **325** are adopted. One locking slot **325** is located at the front part of the periphery of the sliding slot **324.** Another one locking slot **325** is located at the middle part of the periphery of the sliding slot **324.** A handlebar **3211** is disposed on the handle unit **321** and opposite to the bottom base **320.** The handlebar **3211** is adapted to control the foldable stroller wagon **3.**

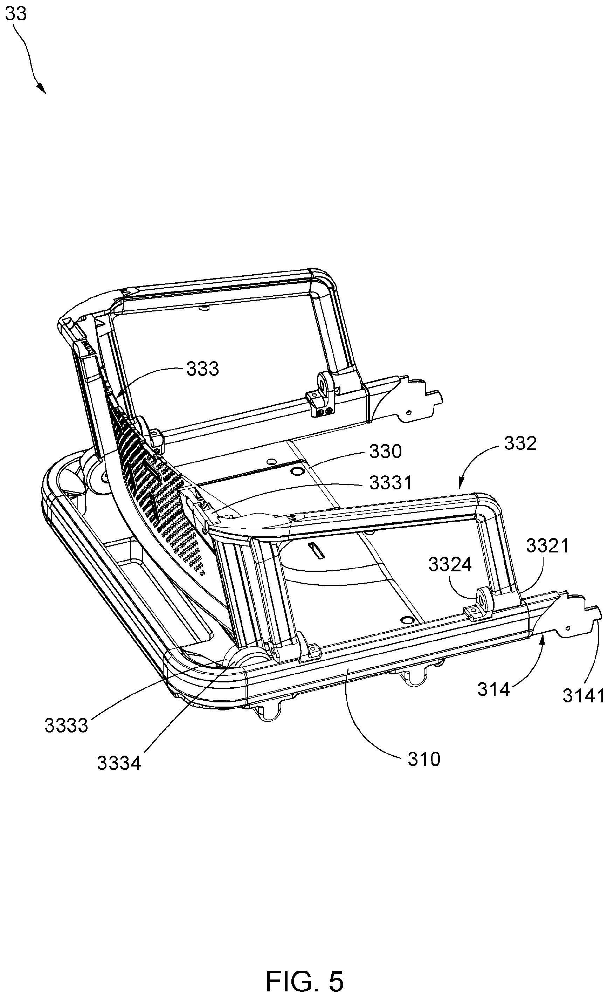

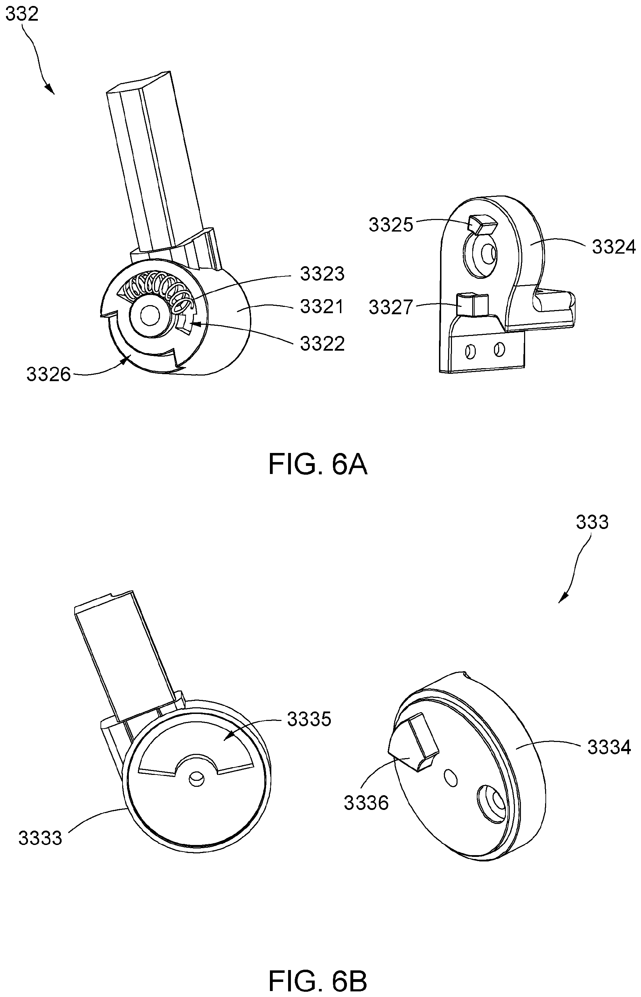

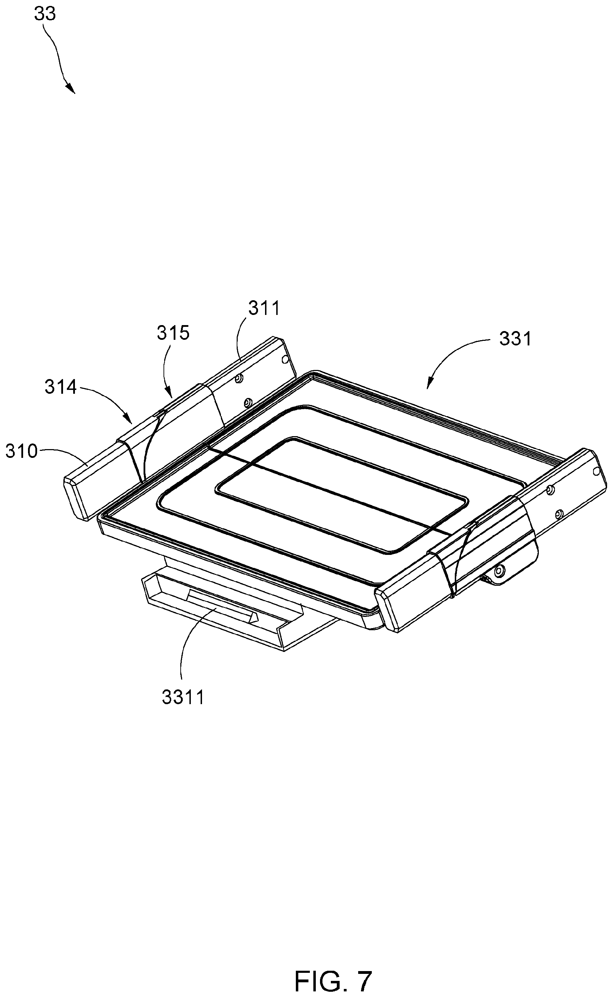

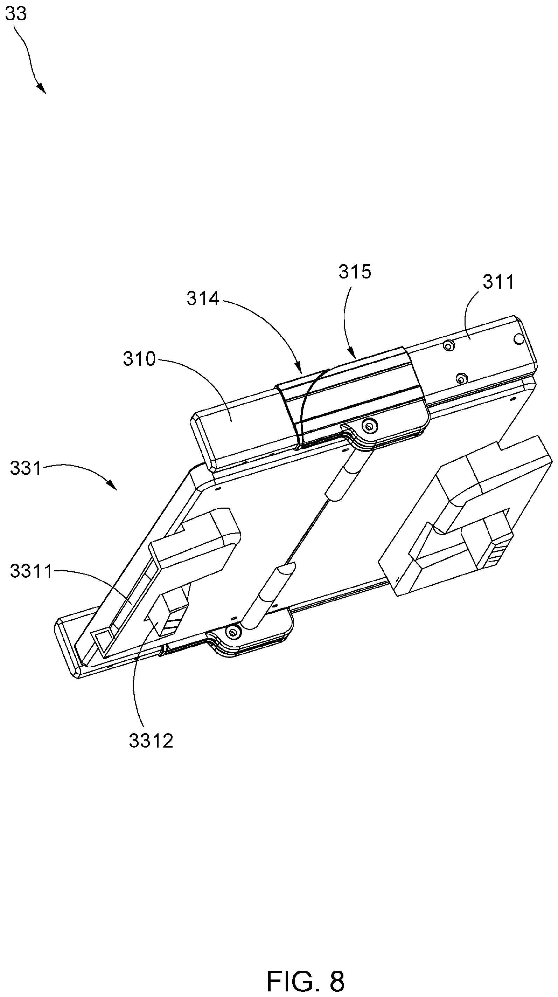

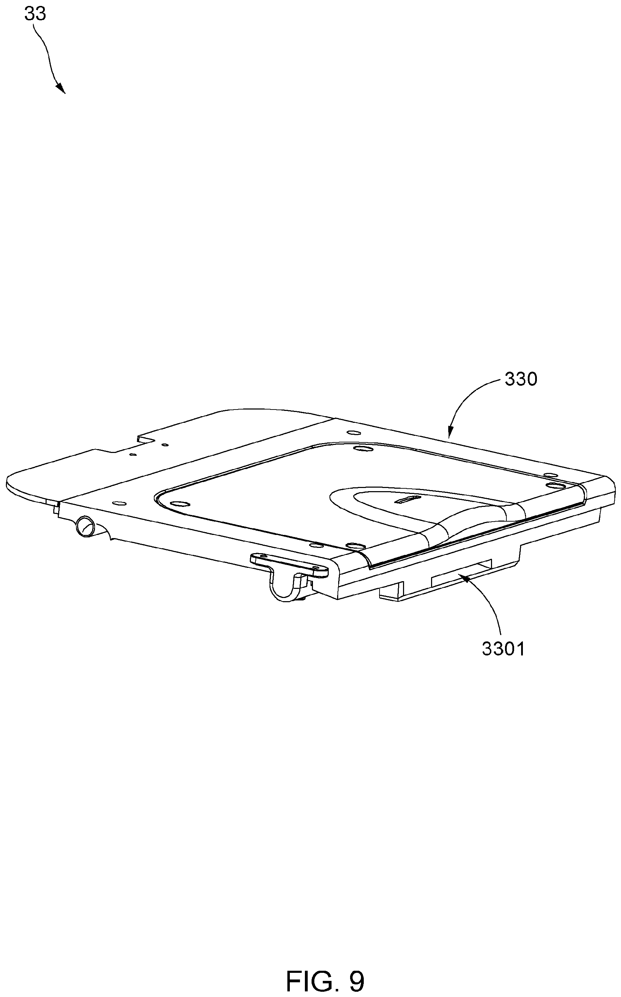

Referring to Figs. **1** and **5****,** each seat set **33** includes a floor plate **330,** a sealing plate **331** connected to the floor plate **330,** two handrails **332** pivotally disposed on the frame set **31** and located in opposing relationship, and a back plate **333** disposed between the handrails **332.** Referring to Figs. **2** and **5****,** each seat set **33** also includes two second telescopic members **3331** and a second operating member **3332** disposed on the back plate **333** and linked to the second telescopic members **3331.** Each second telescopic member **3331** is disposed on a place where the back plate **333** and each handrail **332** meet. Referring to Figs. **7** and **8****,** each seat set **33** also includes a first telescopic member **3311** disposed on the sealing plate **331** and a first operating member **3312** connected to the first telescopic member **3311.** Referring to Fig. **9****,** each seat set **33** also includes a receiving slot **3301** formed on the floor plate **330** and adapted to accommodate the first telescopic member **3311.** Referring to Figs. **1** and **6A****,** each seat set **33** also includes a first engagement member **3321** disposed on a place where each handrail **332** and the frame set **31** connect, an engagement slot **3322** formed on the first engagement member **3321,** a third elastic member **3323** disposed in the engagement slot **3322,** a second engagement member **3324** located relative to the first engagement member **3321,** an engagement unit **3325** disposed on the second engagement member **3324** and located in the engagement slot **3322,** an assistant slot **3326** formed on the first engagement member **3321,** and an assistant unit **3327** disposed on the second engagement member **3324.** The assistant unit **3327** is inserted into the assistant slot **3326** for limiting a swinging angle of each handrail **332** when the first engagement member **3321** and the second engagement member **3324** are engaged with each other, thereby preventing each handrail **332** from unduly swinging. The third elastic member **3323** is compressed by the engagement unit **3325** when each handrail **332** is engaged with the back plate **333.**

Referring to Figs. **1** and **6B****,** each seat set **33** also includes a first guiding member **3333,** a second guiding member **3334** located relative to the first guiding member **3333,** a guiding slot **3335** formed on the first guiding member **3333,** and a guiding unit **3336** disposed on the second guiding member **3334** and located in the guiding slot **3335.** The first guiding member **3333** and the second guiding member **3334** are disposed on a place where the back plate **333** and the frame set **31** connect for limiting a swinging angle of the back plate **333,** thereby preventing the back plate **333** from unduly swinging. In this preferred embodiment, one seat set **33A** is disposed on the front main frame **310** and another seat set **33B** is disposed on the rear main frame **311.** Namely, the floor plate **330** and the handrails **332** of the seat set **33A** are respectively installed on the front main frame **310.** The first engagement member **3321** and the second engagement member **3324** of the seat set **33A** are disposed on the place where each handrail **332** and the front main frame **310** connect. The first guiding member **3333** and the second guiding member **3334** of the seat set **33A** are disposed on the place where the back plate **333** and the front main frame **310** connect. The floor plate **330** and the handrails **332** of the seat set **33B** are respectively installed on the rear main frame **311.** The first engagement member **3321** and the second engagement member **3324** of the seat set **33B** are disposed on the place where each handrail **332** and the rear main frame **311** connect. The first guiding member **3333** and the second guiding member **3334** of the seat set **33B** are disposed on the place where the back plate **333** and the rear main frame **311** connect. The sealing plates **331** of the seat sets **33A, 33B** are pivotally connected to each other and further connected to respective floor plate **330** so that the sealing plates **331** can be folded accordingly when the front main frame **310** and the rear main frame **311** are folded.

Referring to Figs. **1** to **9****,** during a folding operation of the foldable stroller wagon **3,** the second operating member **3332** disposed on each back plate **333** is triggered by pressing in order to separate the second telescopic members **3331** from the handrails **332.** Namely, the second operating member **3332** is operated to withdraw the second telescopic members **3331** from relative handrails **332** so that the back plate **333** and the handrails **332** are in an unlocked state. The back plate **333** is then folded to the floor plate **330.** Because the handrails **332** are free from the back plate **333,** the third elastic members **3323** of the handrails **332** are not compressed so that each third elastic member **3323** returns to its original shape. The engagement units **3325** are then pushed by an elasticity of the third elastic members **3323,** thereby allowing the handrails **332** to be folded to the floor plate **330.** Referring to Fig. **4****,** the functional unit **329** is moved toward the handlebar **3211** to carry out a movement of the fastening unit **326** so that the locking unit **328** escapes from the locking slot **325** because of the movement of the fastening unit **326** and slides into the sliding slot **324** to unlock the handle unit **321.**

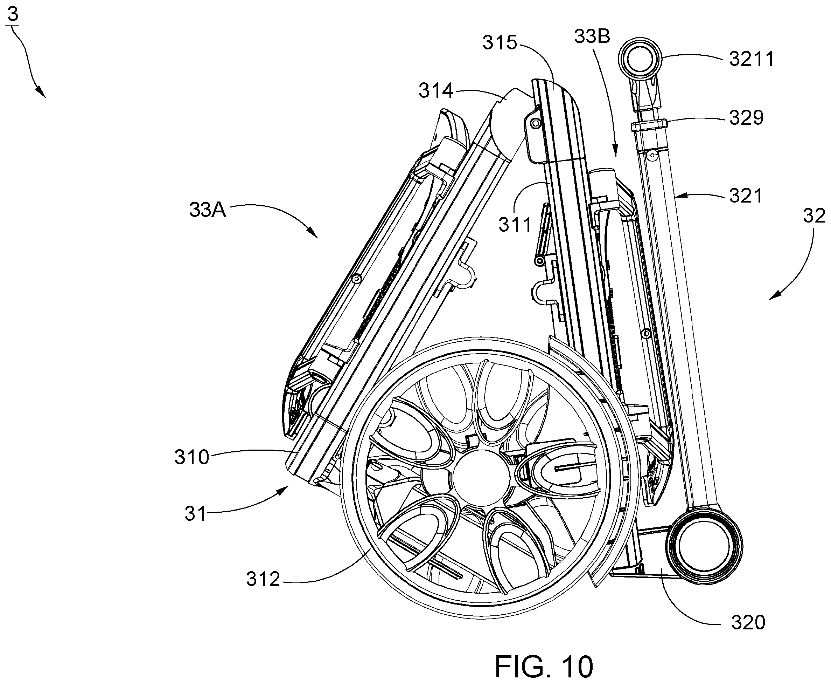

After that, the handle unit **321** is swung inwards to the floor plate **330** so that the handle unit **321** is folded. During the inward swinging action of the handle unit **321,** the third acting member **323** is forced to move the second acting member **322** which is movably disposed in the bottom base **320.** The movement of the second acting member **322** causes the first acting member **313** to withdraw from the positioning slot **316** by the rope unit **R** so that the front main frame **310** and the rear main frame **311** are unfastened. Namely, the front main frame **310** and the rear main frame **311** are capable of being pivotally folded. Thus, the folding operation is finished after the front main frame **310** and the rear main frame **311** are folded for storage. The foldable stroller wagon **3** which is folded is shown in Fig. **10****.** Therefore, the folding operation is greatly simplified, thereby allowing the folding operation to become easier and more convenient and saving the time and labor for executing the folding operation. Meanwhile, the occupied space is efficiently reduced after the foldable stroller wagon **3** is folded, and that facilitates the storage. Further, the foldable stroller wagon **3** is capable of standing by its own after being folded, and therefore the user can directly move the foldable stroller wagon **3** by operating the wheels **312** and the handlebar **3211.** Hence, the foldable stroller wagon **3** is highly convenient for transportation, carrying and storage.

Referring to Figs. **1** to **9****,** during an unfolding operation of the foldable stroller wagon **3,** the front main frame **310** and the rear main frame **311** are opened and unfolded to allow the limiting unit **3141** of the first limiting member **314** to be engaged with the limiting slot **3151** of the second limiting member **315.** After that, the handle unit **321** is swung outwards to force the third acting member **323** to withdraw. The withdraw of the third acting member **323** allows the second acting member **322** to return to its original position and stop moving the first acting member **313.** The first acting member **313** is then pushed into the positioning slot **316** by an elasticity of the first elastic member **317** so that the front main frame **310** and the rear main frame **311** are fixed. Namely, the front main frame **310** and the rear main frame **311** are incapable of being pivotally folded when the first acting member **313** is inserted into the positioning slot **316.**

During the outward swinging action of the handle unit **321,** the locking unit **328** is forced to slide along the sliding slot **324.** When the locking unit **328** is moved to the locking slot **325,** the fastening unit **326** is pushed by an elasticity of the second elastic member **327** to allow the locking unit **328** to be embedded in the locking slot **325** so that the handle unit **321** is fixed. Thus, the handle unit **321** is incapable of swinging. Next, the handrails **332** and the back plate **333** are opened and unfolded. The handrails **332** are respectively engaged with the back plate **333** when the second telescopic members **3331** are inserted into the handrails **332.** Thus, the unfolding operation is finished. The foldable stroller wagon **3** is provided with a stable structure and sufficient space for seating and storing after being unfolded, thereby improving the moving stability and improving the seating comfort.

Referring to Figs. **1****,** **7****,** **8** and **9****,** when the foldable stroller wagon **3** is in use, each sealing plate **331** can be detached from relative floor plate **330** according to needs. Namely, the first operating member **3312** disposed on the sealing plate **331** which is going to be unfastened is operated to withdraw the first telescopic member **3311** from the receiving slot **3301** so that the sealing plate **331** is detached from the floor plate **330.** When the sealing plate **331** is unfastened, the sealing plate **331** is pivotally swung downwards caused by the gravity to form a gap. The gap allows the baby's feet to hang down. Aprotecting stuff (not shown) can be disposed below the gap in order to prevent the baby's feet from being in contact with the ground. If the gap is not needed, the sealing plate **331** is adapted to seal the gap. Namely, the sealing plate **331** is fixed to the floor plate **330** by operating the first operating member **3312** so that the first telescopic member **3311** is triggered by the first operating member **3312** to be inserted into the receiving slot **3301.** Further, a soft rug (not shown) can be placed on the floor plates **330** and the sealing plates **331** so that the baby can lie down, thereby improving the variability and convenience of use.

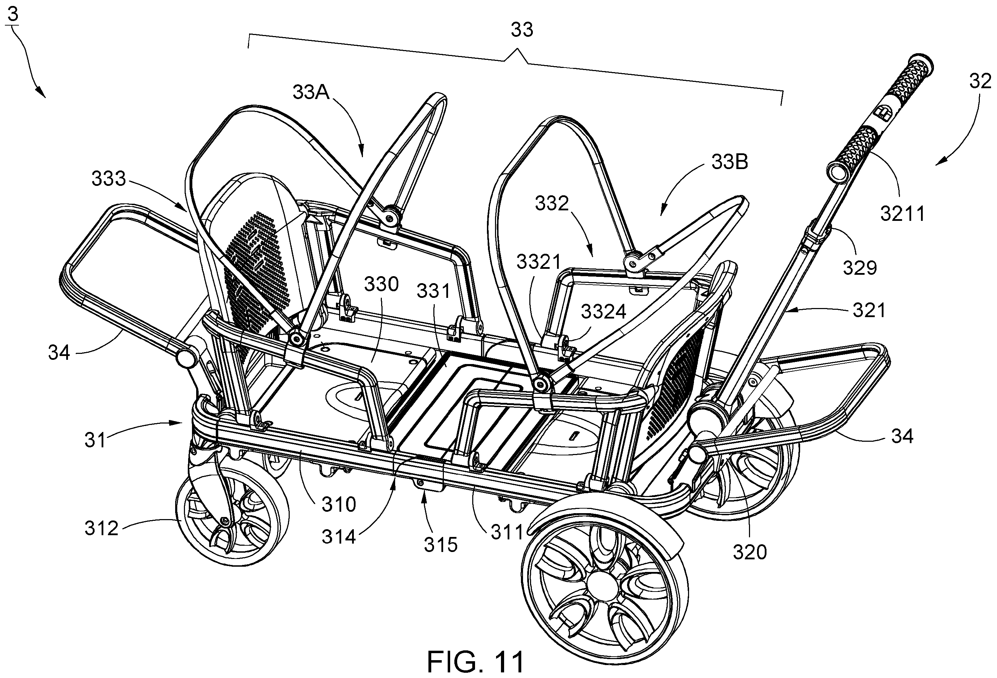

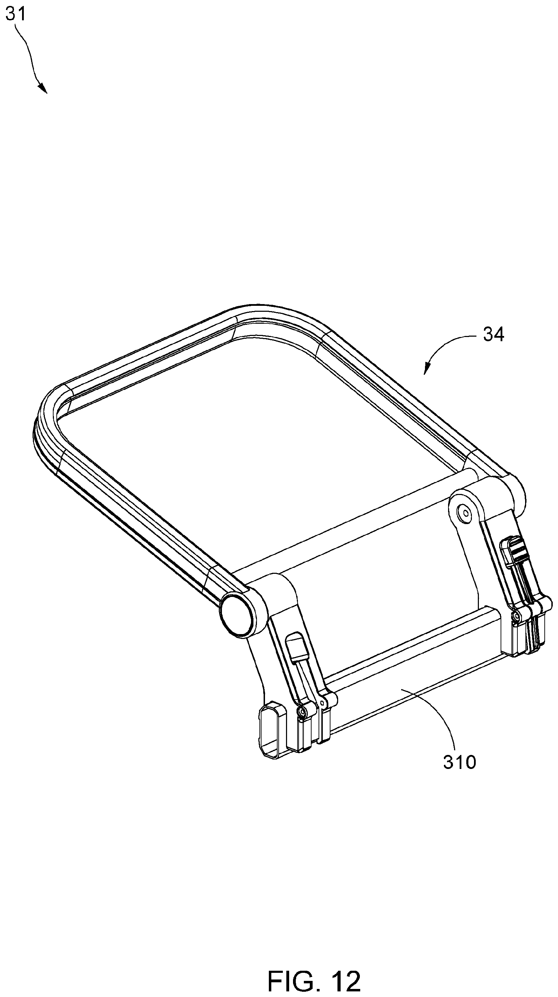

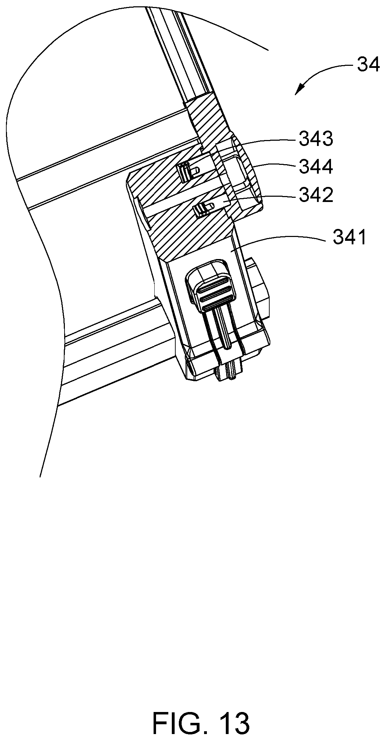

Referring to Figs. **11** to **13** show a second preferred embodiment of the foldable stroller wagon **3** of this invention. The correlated elements and the concatenation of elements, the operation and objectives of the second preferred embodiment are the same as those of the first preferred embodiment. This embodiment is characterized in that at least one auxiliary frame **34** is pivotally connected to the frame set **31.** Here takes an example that two auxiliary frames **34** are adopted and respectively pivotally disposed on the front main frame **310** and the rear main frame **311.** Each auxiliary frame **34** includes an auxiliary base **341,** an auxiliary unit **342** disposed in the auxiliary base **341,** a fourth elastic member **343** disposed in the auxiliary base **341** and located on one side of the auxiliary unit **342,** and a releasing unit **344** disposed on another side of the auxiliary unit **342.** The auxiliary unit **342** is pushed in one direction by pressing the releasing unit **344** to unlock the auxiliary base **341.** The unlocking state of the auxiliary base **341** allows the auxiliary frame **34** to swing, thereby adjusting the auxiliary frame **34** to a desired position. When the auxiliary unit **342** is pushed in another direction by an elasticity of the fourth elastic member **343,** the auxiliary base **341** is locked, thereby preventing the auxiliary frame **34** from swinging. A bag (not shown) can be disposed on the auxiliary frame **34** according to needs for storage, thereby increasing the convenience of use.

To sum up, the foldable stroller wagon of this invention takes advantages that the first acting member and the positioning slot are disposed between the main frames and located relative to each other. The second acting member is disposed on the bottom base and connected to the first acting member. The third acting member is disposed on the handle unit and located relative to the second acting member. During the folding operation, the handle unit is operated to force the third acting member to push the second acting member so that the first acting member is moved by pushing the second acting member to further withdraw the first acting member from the positioning slot whereby the main frames are unlocked and capable of being folded. Thus, the folding operation is greatly simplified, thereby reducing the time and labor expended on the folding operation. The foldable stroller wagon also assists in reducing the occupied space after being folded, thereby facilitating the storage of the foldable stroller wagon. Further, the foldable stroller wagon is provided with a stable structure and sufficient space for seating or storing after being unfolded, thereby maintaining the great moving stability and improving the seating comfort.

While the embodiments of this invention are shown and described, it is understood that further variations and modifications may be made without departing from the scope of this invention.

## Claims

1. A foldable stroller wagon (3) comprising:
a frame set (31) including two main frames (310, 311), a plurality of wheels (312) disposed below said two main frames (310, 311), a positioning slot (316) formed inside said two main frames (310, 311), and a first acting member (313) movably disposed between said two main frames (310, 311) so that said two main frames (310, 311) are fixed when said first acting member (313) enters said positioning slot (316);
a holding set (32) including a bottom base (320) connected to any one of said two main frames (310, 311), a handle unit (321) pivotally connected to said bottom base (320), a second acting member (322) slidably disposed on said bottom base (320), and a third acting member (323) disposed on said handle unit (321) and located relative to said second acting member (322), said second acting member (322) being connected to said first acting member (313), said third acting member (323) serving to push said second acting member (322) while operating said handle unit (321), said first acting member (313) being moved by pushing said second acting member (322) with said third acting member (323), thus unlocking said two main frames (310, 311); and
at least one seat set (33) including a floor plate (330), a sealing plate (331) connected to said floor plate (330), two opposite handrails (332) pivotally disposed on at least one of said two main frames (310, 311), and a back plate (333) disposed between said two handrails (332).

2. The foldable stroller wagon (3) according to claim 1, wherein said frame set (31) includes a first limiting member (314) disposed on one of said two main frames (310, 311), a second limiting member (315) disposed on another one of said two main frames (310, 311) and located beside said first limiting member (314), and a first elastic member (317) disposed on said second limiting member (315), said positioning slot (316) being formed between said first limiting member (314) and said second limiting member (315), said first acting member (313) being pushed into said positioning slot (316) by an elasticity of said first elastic member (317).

3. The foldable stroller wagon (3) according to claim 2, wherein a limiting unit (3141) is disposed on said first limiting member (314), and a limiting slot (3151) is formed on said second limiting member (315), said limiting unit (3141) being adapted to be engaged with said limiting slot (3151), thereby strengthening an engagement between said two main frames (310, 311).

4. The foldable stroller wagon (3) according to claim 1, wherein said holding set (32) includes a sliding slot (324) recessedly formed into said handle unit (321), at least one locking slot (325) formed on a periphery of said sliding slot (324), a fastening unit (326) disposed on said handle unit (321), a second elastic member (327) connected to said fastening unit (326), a locking unit (328) penetrated through said fastening unit (326), and a functional unit (329) disposed on said handle unit (321) and connected to said fastening unit (326), said fastening unit (326) being pushed by an elasticity of said second elastic member (327), and said locking unit (328) being embedded in said at least one locking slot (325) to fix said handle unit (321) after said fastening unit (326) is pushed by said second elastic member (327), a movement of said fastening unit (326) being driven by triggering said functional unit (329) so that said locking unit (328) escapes from said at least one locking slot (325) because of said movement of said fastening unit (326) and slides into said sliding slot (324) to unlock said handle unit (321).

5. The foldable stroller wagon (3) according to claim 1, wherein said at least one seat set (33) includes a first telescopic member (3311) disposed on said sealing plate (331), a receiving slot (3301) formed on said floor plate (330), and a first operating member (3312) connected to said first telescopic member (3311), said first operating member (3312) being operated to insert said first telescopic member (3311) into said receiving slot (3301) or withdraw said first telescopic member (3311) from said receiving slot (3301), said sealing plate (331) and said floor plate (330) thereby being engaged with each other by the insertion of said first telescopic member (3311), said sealing plate (331) thereby being separated from said floor plate (330) by the withdrawal of said first telescopic member (3311).

6. The foldable stroller wagon (3) according to claim 1, wherein said at least one seat set (33) includes two second telescopic members (3331) and a second operating member (3332) disposed on said back plate (333) and linked to said two second telescopic members (3331), each of said two second telescopic members (3331) being disposed on a place where said back plate (333) and each of said two handrails (332) meet, said second operating member (3332) being triggered to separate said two second telescopic members (3331) from said two handrails (332) so that said back plate (333) and said two handrails (332) are in an unlocked state.

7. The foldable stroller wagon (3) according to claim 1, wherein said at least one seat set (33) includes a first engagement member (3321) disposed on a place where each of said two handrails (332) and said at least one of said two main frames (310, 311) connect, an engagement slot (3322) formed on said first engagement member (3321), a third elastic member (3323) disposed in said engagement slot (3322), a second engagement member (3324) located relative to said first engagement member (3321), and an engagement unit (3325) disposed on said second engagement member (3324), said engagement unit (3325) being located in said engagement slot (3322), and said third elastic member (3323) being compressed by said engagement unit (3325) when each of said two handrails (332) is engaged with said back plate (333).

8. The foldable stroller wagon (3) according to claim 7, wherein an assistant slot (3326) is formed on said first engagement member (3321), and an assistant unit (3327) is disposed on said second engagement member (3324), said assistant unit (3327) being inserted into said assistant slot (3326) for limiting a swinging angle of each of said two handrails (332) when said first engagement member (3321) and said second engagement member (3324) are engaged with each other.

9. The foldable stroller wagon (3) according to claim 1, wherein at least one auxiliary frame (34) is pivotally connected to said at least one of said two main frames (310, 311), said at least one auxiliary frame (34) including an auxiliary base (341), an auxiliary unit (342) disposed in said auxiliary base (341), a fourth elastic member (343) disposed in said auxiliary base (341) and located on one side of said auxiliary unit (342), and a releasing unit (344) disposed on another side of said auxiliary unit (342), said auxiliary unit (342) being pushed in one direction by pressing said releasing unit (344) to unlock said auxiliary base (341), the unlocking state of said auxiliary base (341) allowing said auxiliary frame (34) to swing, said auxiliary unit (342) being pushed in another direction by an elasticity of said fourth elastic member (343) to lock said auxiliary base (341) and prevent said auxiliary frame (34) from swinging.

10. The foldable stroller wagon (3) according to claim 1, wherein said at least one seat set (33) includes a first guiding member (3333), a second guiding member (3334) located relative to said first guiding member (3333), a guiding slot (3335) formed on said first guiding member (3333), and a guiding unit (3336) disposed on said second guiding member (3334) and located in said guiding slot (3335), said first guiding member (3333) and said second guiding member (3334) being disposed on a place where said back plate (333) and said at least one of said two main frames (310, 311) connect for limiting a swinging angle of said back plate (333) .

11. The foldable stroller wagon (3) according to claim 1, wherein two seat sets (33A, 33B) are adopted, and each of said two seat (33A, 33B) sets is disposed on each of said two main frames (310, 311).
